Europäisches Patentamt

European Patent Office

Office européen des brevets

(19)

(11) Publication number: **0 103 316**
**A2**

# EUROPEAN PATENT APPLICATION

(12)

(21) Application number: 83201130.8

(22) Date of filing: 29.07.83

(51) Int. Cl.³: **F 16 H 25/22**

(30) Priority: 19.08.82 IT 2289782

(43) Date of publication of application: 21.03.84
Bulletin 84/12

(84) Designated Contracting States: DE FR GB IT

(71) Applicant: OFFICINA MECCANICA SCARAVELLA
ALFREDO & F.LLI, Via Pavesi, 26, I-29100 Piacenza (IT)

(72) Inventor: Scaravella, Alfredo, Via Pavesi, 26,
I-29100 Piacenza (IT)

(74) Representative: Giambrocono, Alfonso, Dr. Ing. et al,
Ing. A. Giambrocono & C. s.r.l. Via Rosolino Pilo, 19/b,
I-20129 Milano (IT)

(54) A nut for ball bearing screws having an improved ball deviating element.

(57) The nut (1, 17, 28) has conventionally an inside thread forming track for balls (5) and deviating elements for recirculating said balls from one thread to the adjoining one or for recirculating said balls from one thread to another spaced away thread along a substantially axial conduit bored in the nut. In order to prevent impacts of the circulating balls against the deviating element, said deviating element (8, 18, 18', 29) has a deviated path (11, 20, 20', 30) obtained by bosses (13, 13', 25, 25') forming edges (12, 12') of a S-shaped groove (11) or forming lead-in portions (24, 24') of an inner conduit (20, 20').

A NUT FOR BALL BEARING SCREWS HAVING AN IMPROVED BALL BEARING
DEVIATING ELEMENT.

The present invention relates to a nut for ball bearing screws having an improved ball deviating element.

The ball bearing screws, as known, comprise a nut and a shaft and a threading inside the nut and outside the shaft for accomodating a plurality of balls which are recirculated by means of deviating elements associated to the nut.

The ball bearing screws are of two types, i.e. a first type in which the deviating element provides for the recirculation of the balls from one thread to the adjoining one and a second type which comprises a pair of deviating elements for providing the recirculation of the balls from one thread to another spaced away thread along a substantially axial conduit bored in the nut.

The ball bearing screws are generally used where required to ensure the handling of mechanical means of considerable mass at high speed and accuracy, while assuring low friction coefficient and hing reliability. A typical example as to the application of said mechanical means are the machine tolls, and in particular computerised machine tools which have to operate with high level of accuracy.

In this field there is the trend to reduce the idle times between two successive working operations and this is done by increasing the displacement rate of the various components. Accordingly, the ball bearing screws are subjected to higher and higher speeds and, as a result, impacts would occur at those areas where a change in ball path is required, which impacts -if not suitably opposed- will lead to a ready and fast wearing of the ball bearing screw.

The deviating elements at present known comprise inserts positioned on the nut which are of complicated structure and comprise a plurality of parts to be secured on the outer surface of the nut.

The solutions hitherto proposed, in addition of being of complicate structure and proportionally expensive, have the drawback of not allowing a correct recirculation of the balls mainly due to shortage of edges along the deviated path, which shortage causes undesired impacts of the balls and fast wear of the assembly.

Another drawback of such conventional solutions resides in difficulty of assembling the deviating element to the nut, which is generally commited to pins, glueing or other mechanical fastening means.

It's an object of the present invention to provide a nut for ball bearing screws having an improved ball deviating element of such a configuration as to allow a sturdy connection of the inside nut threading and the deviated path, thereby substantially removing any cause of rapid wear in the assembly.

It's another object of the invention to provide a deviating element of such a configuration as to allow, in addition to the removal of impacts between balls and deviated path, also a rapid assembling without any need of using external elements.

The nut for ball bearing screws according to the invention could be of the type for recirculating the balls from one thread to the adjoining one or for recirculating said balls from one thread to another spaced away thread along a substantially axial conduit bored in the nut an is substantially characterised in that for the first type said ball deviating element has a deviated path for said balls as obtained by bosses provided on a body insertable in the nut, said deviating path having a first mouth associated with a thread portion of said one thread and a second mouth associated with said adjoining thread and characterised in that for the second type there are provided a pair of deviating elements each having an inner conduit with a mouth exiting in the respective thread and a mouth exiting in the axial conduit, each inner conduit being obtained by bosses provided on a body insertable in the nut.

One way for carrying out the invention is described in detail below with reference to the drawings which illustrate three embodiments, in which:
- Fig. 1 is a cross-sectional view of a first embodiment of a nut incorporating the improved ball deviating element of the invention, the recirculation of the balls being from one thread to the adjoining one;
- Fig. 2 is a sectional view taken along line II-II of Fig. 1;
- Fig. 3 is a cross-sectional view of a second embodiment of a nut incorporating the improved ball deviating element of the invention, the recirculation of the balls being from one thread to another spaced away thread along a substantially axial conduit bored in the nut;
- Fig. 4 is a sectional view taken along line IV-IV of Fig. 3;
- Fig. 5 is a cross-sectional view of a further imbodiment of the invention substantially conglobating the embodiments of Figs.

1-4; and
   - Fig. 6 is a sectional view taken along line VI-VI of Fig. 5.

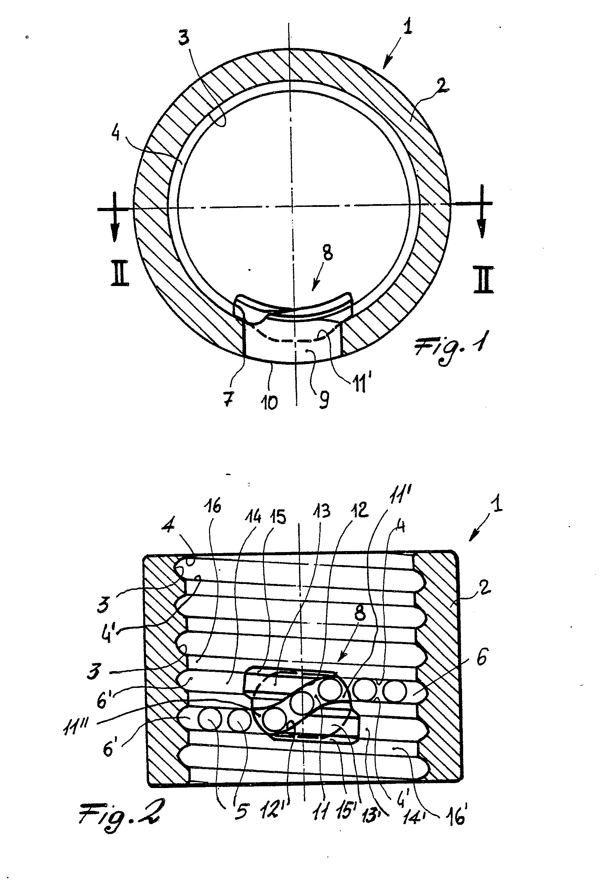

With particular reference to Figs. 1 and 2, a nut -generally shown at 1- comprises a tubular steel body 2 having a threading conventionally formed in its internal surface including a continuous rounded bottom thread 3 having edges 4 and 4' for the sliding of a plurality of balls 5. The thread depth is less than the balls' diameter, whereby the latter are free to cooperate with a corresponding threading on a shaft (not shown) making up, together with the nut, the ball bearing screw assembly. As above mentioned, such a structure is within the prior art and therefore is no part of the present invention.

At two adjoining thread portions 6 and 6', said body 2 has a through hole 7 for the exact housing of a improved deviating element according to the invention aɗn generally shown at 8.

The element 8 is formed by a body 9 having, when housed in said hole 7, a smooth external surface 10 arranged flush with the external surface of the body 2 and an internal surface having a sustantially S-shaped groove 11 with a bottom 11', as shown in Fig. 1, lower than the rounded bottom 3 of the inside threading of the nut.

The groove 11 is defined by two opposite edges 12 and 12' arranged as continuation respectively of the edges 4 and 4' of said two adjoining thread portions 6 and 6', said edges 12 and 12' being obtained by providing the internal surface of the deviating element 8 with cylindrical bosses 13 and 13' of a cross-section corresponding to the section of the threading provided on the outer surface of the shaft, said bosses 13 and 13' being arranged in alignment with the thread portions 6 and 6' respectively so as to form mouths 11' and 11".

As shown in Figs. 1 and 2, the leading portions of the cylindrical bosses 13 and 13' project beyond the body 9 to be accomodated within the inoperative branches 14 and 14' of the thread portions 6 and 6'. The body 9 also has side extensions 15 and 15' intended to bear on the ridges 16 and 16' joining alternate thread portions 6 and 6'.

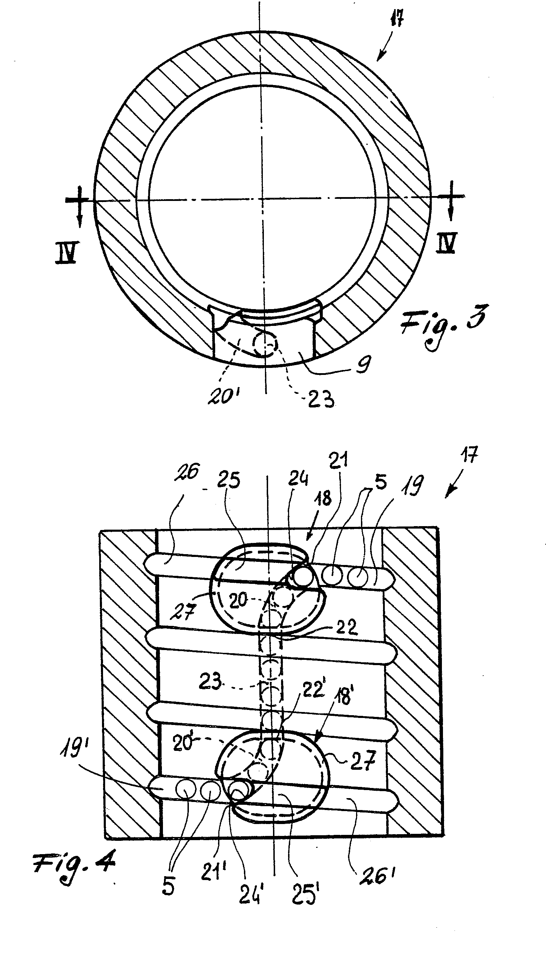

With particular reference to Figs. 3 and 4, the invention concept of making edges along the deviated path is applied to a nut, generally shown at 17, for the recirculation of the balls 5 from one thread to another spaced away thread along a substantially axial conduit bored in the nut.

The nut 17 is provided with two deviating elements, generally shown at 18 and 18', superimposed and respectively cooperating with a first thread 19 and a second thread 19'.

Each deviating element 18 and 18' has an inner conduit 20 and 20', the conduit 20 having a mouth 21 exiting in the first thread 19 and a mouth 22 exiting into one end of an axial conduit 23 bored in the nut 17 and the conduit 20' having a mouth 21' exiting in the second thread 19' and a mouth 22' exiting into the other end of the axial conduit 23.

The lead-in portions 24 and 24' of the mouth 21 and 21' are bored into cylindrical bosses 25 and 25' corresponding to the bosses 13 and 13' of the embodiment shown in Figs. 1 and 2.

By this arrangement, the incoming balls 5 are impactless guided along said lead-in portions 24 and 24' to enter the axial conduit 23.

As shown in Figs. 3 and 4, the leading portions of bosses 25 and 25' project beyond the elements 18 and 18' to be accomodated within the inoperative branches 26 and 26' of the thread portions 19 and 19', respectively. Also in this case side reteaning extensions 27 are provided.

It clearly appears from the foregoing that the bosses 13, 13' of Figs. 1 and 2 and the bosses 25, 25' of Figs. 3 and 4 make up a thickness for forming the edges 12, 12' and the lead-in portions 24, 24' so that the groove 11 of Figs. 1 and 2 and the conduits 20, 20' of Figs. 3 and 4 can be correctly joined to the relative thread portions, and thus avoiding any possible risk of impact of the balls 5 during recirculation. Additionally, owing to the particular cross-section thereof, the cylindrical bosses will cooperate with the shaft's threading ensuring, together with the side extensions 15, 15' and 27, a correct and steady positioning of the deviating elements in the nut.

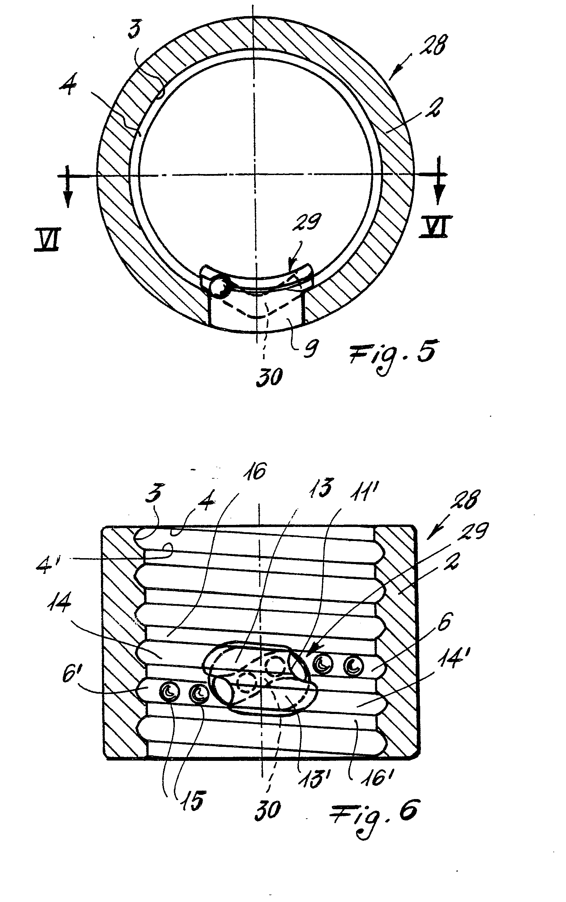

The inventive concept of making edges along the deviated path has been also applied to a nut, generally shown at 28 in Figs. 5 and 6 wherein the parts corresponding to those of Figs. 1 and 2 are indicated with the same reference numerals. In this embodiment, as the one shown in Figs. 1 and 2, the nut 28 is provided with a deviating element 29 providing for the recirculation of the balls 5 from one thread to the adjoining one and differs from the deviating element 8 in that it is provided, instead than the groove 11, with an inner conduit 30 bored in the same deviating element 29.

Claims:

1. A nut for ball bearing screws of the type comprising a ball deviating element for recirculating said balls from one thread to the adjoining one, characterised in that said ball deviating element (8, 29) has a deviated path (11, 30) for said balls (5) obtained by bosses (13, 13') provided on a body (9) insertable in said nut (1, 28), said deviated path having a first mouth (11') associated with a thread portion (6) of said one thread and a second mouth (11") associated with a portion (6') of said adjoining thread.

2. A nut according to claim 1, characterised in that said deviated path is a groove (11).

3. A nut according to claim 1, characterised in that said deviated path is an inner conduit (30) bored in said body (9).

4. A nut according to claim 1, characterised in that said bosses are edges (12, 12') for said deviated path.

5. A nut according to claim 1, characterised in that said bosses are of cross section substantially corresponding to the sliding track of said balls.

6. A nut for ball bearing screws of the type comprising a pair of superimposed ball deviating elements for recirculating said balls from one thread to another spaced away thread along a substantially axial conduit bored in the nut, characterised in that each ball deviating element (18, 18') has an inner conduit (20, 20') having a mouth (21, 21') exiting in the respective thread and a mouth (22, 22') exiting in said axial conduit (23), said inner conduit being obtained by bosses (25, 25') provided on a body insertable in said nut (17).

7. A nut according to the preceding claims, characterised in that the leading portions (24, 24') of the bosses project beyond the body (9) to be accomodated within the inoperative branches (26, 26') of the thread.

8. A nut according to the preceding claims, characterised in that the body has side extensions (15; 15', 27) bearing on the ridges (16, 16') joining adjacent thread portions.

Fig. 1

Fig. 2

0103316

0103316

*Fig. 3*

*Fig. 4*

Fig. 5

Fig. 6